# EUROPEAN PATENT APPLICATION

(11) **EP 1 868 415 A1**
(43) Date of publication of application: **19.12.2007**
(21) Application number: 06731345.2
(22) Date of filing: 31.03.2006
(51) Int. Cl.: H04S 5/02, H04N 5/225, H04R 3/00

(54) **SOUND SIGNAL PROCESSING DEVICE AND SOUND SIGNAL PROCESSING METHOD**

(30) Priority: 05.04.2005 JP 2005108138
(71) Applicant: Sony Corporation, Minato-ku Tokyo (JP)
(72) Inventor: NAKAMURA, Shinji, Shinagawa-ku, Tokyo 108-0075 (JP); OHATA, Tadahiro, Shinagawa-ku, Tokyo 108-0075 (JP)
(74) Representative: Nicholls, Michael John
(86) International application number: PCT/JP2006/307397
(87) International publication number: WO 2006/107102

(57) **Abstract**

The present invention is applied to, for example, a camera-integrated video tape recorder. A setting of channels of audio signals that are input from a plurality of audio signal input terminals 32F and 32R is detected. Signal processing is performed after switching the right channel and the left channel in accordance with the result of this detection.

## Description

### Technical Field

The present invention relates to audio signal processing apparatuses and audio signal processing methods, and can be applied to, for example, camera-integrated video tape recorders. Even in a case where sound is recorded in surround sound using a plurality of stereo microphones, the present invention correctly creates a sound field with high presence by detecting settings of channels of audio signals input from a plurality of audio signal input terminals and by performing signal processing after switching the right channel and the left channel in accordance with a result of this detection.

### Background Art

Conventionally, camera-integrated video tape recorders are configured to acquire two-channel stereo audio signals with built-in microphones, and to record these two-channel audio signals on a magnetic tape together with results of imaging. Regarding such camera-integrated video tape recorders, for example, Japanese Unexamined Utility Model Registration Application Publication No. 5-11650 has suggested a method for enabling processing of narration or the like to be easily performed by mixing audio signals reproduced from a magnetic tape and audio signals acquired with a built-in microphone, and outputting the mixed signals.

Some of such camera-integrated video tape recorders are capable of recording audio signals on four channels. Such camera-integrated video tape recorders can be connected to a plurality of stereo microphones and can record surround-sound audio signals.

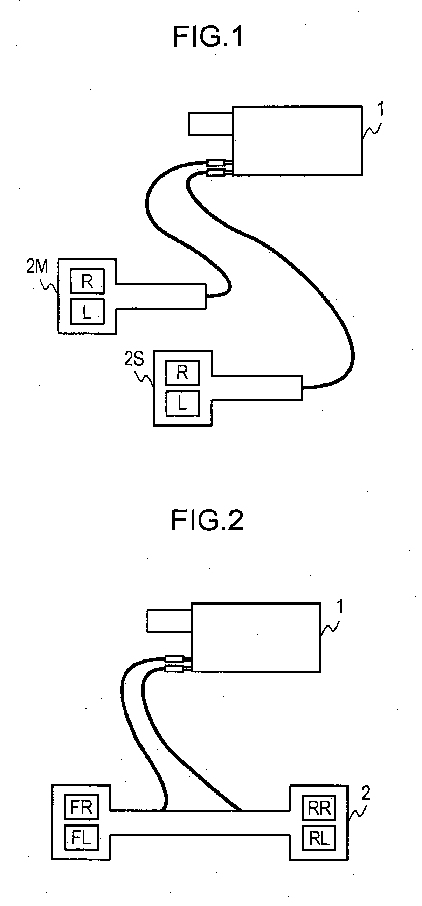

More specifically, as shown in Fig. 1, in such surround-sound recording, audio in the front is acquired using a main stereo microphone 2M and a sub stereo microphone 2S, which has directivity different from this main microphone 2M, and four-channel audio signals are recorded with these main and sub microphones 2M and 2S. Hereinafter, a surround-sound system using only the front audio as described above is referred to as a front-only surround-sound system, appropriately.

For this purpose, a camera-integrated video tape recorder 1 of this kind is provided with main and sub audio input terminals connectable to these main and sub microphones 2M and 2S, respectively. The camera-integrated video tape recorder 1 is configured to be supplied with stereo audio signals that are output from these main and sub microphones 2M and 2S through these audio input terminals.

In addition, in such surround-sound recording, both audios in the front and in the rear may be acquired instead of acquiring only audio in the front. Hereinafter, this system is referred to as a front-and-rear surround-sound system, appropriately.

For this purpose, as shown in Fig. 2 in contrast to Fig. 1, a camera-integrated video tape recorder of this kind is provided with a surround-sound microphone 2 into which a microphone FR for the front right channel, a microphone FL for the front left channel, a microphone RR for the rear right channel, and a microphone RL for the rear left channel are integrated. The camera-integrated video tape recorder is configured to be able to record four-channel front-and-rear surround-sound audio signals by using this microphone 2.

On the other hand, regarding portable video recorders that employ an optical disk of a DVD (Digital Versatile Disk) as a recording medium, recorders that perform signal processing on surround-sound audio signals acquired in this manner, and that record the audio signals in the 5.1-channel surround-sound system are provided.

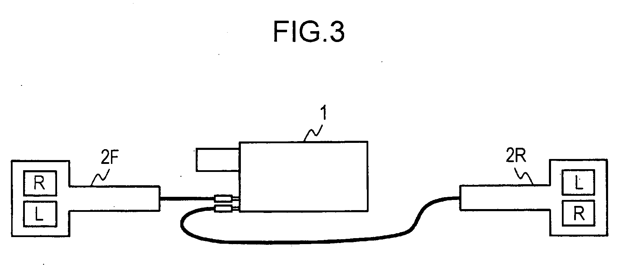

Meanwhile, as shown in Fig. 3 in contrast to Fig. 1 and Fig. 2, audios in the front and in the rear may be acquired using two stereo microphones 2F and 2R, respectively, in the front-and-rear surround-sound recording.

In this case, the rear microphone 2R is rotated by 180 degrees relative to the other microphone 2S in the horizontal direction with respect to the camera-integrated video tape recorder 1 at the center, when it compared with the case of the front-only surround-sound system described above regarding Fig. 1. Due to this, the right channel microphone and the left channel microphone are reversed in these rear microphone 2R and other microphone 2S. Thus, in the case of executing the front-and-rear surround-sound recording with two microphones 2F and 2R, there is a problem that a sound field with high presence cannot be correctly created unless the right channel and the left channel are switched in the rear microphone 2R. Incidentally, in the integrated microphone 2 of the front-and-rear surround-sound system, internal connections of the rear microphones RR and RL are switched so as to correspond to the front-only surround-sound system.

As one method for solving this problem, it is possible to switch the right channel and the left channel by turning the microphone 2R, which is connected to a rear two-channel audio input terminal, upside down. However, if the microphones are turned upside down, various kinds of characteristics may change depending on microphones. Furthermore, some microphones cannot hold the characteristics if they are turned upside down.

### Disclosure of Invention

The present invention is made in consideration of the above-described points. The present invention is to suggest an audio signal processing apparatus and an audio signal processing method for allowing a sound field with high presence to be correctly created even in a case where sound is recorded in surround sound using a plurality of stereo microphones.

To solve the above-described problems, the present invention is applied to an audio signal processing apparatus. The audio signal processing apparatus includes a plurality of audio signal input terminals each for inputting a stereo audio signal, setting detection means for detecting a setting of a right channel and a left channel regarding the audio signals that are input from the plurality of audio signal input terminals, and signal processing means for performing signal processing on the audio signals that are input from the plurality of audio signal input terminals. The signal processing means is configured to perform signal processing after switching the right channel and the left channel of the audio signal that is input from at least one of the plurality of audio signal input terminals on the basis of the result of the detection by the setting detection means.

The configuration of the present invention is applied to the audio signal processing apparatus. The audio signal processing apparatus includes the plurality of audio signal input terminals each for inputting a stereo audio signal, the setting detection means for detecting the setting of the right channel and the left channel regarding the audio signals that are input from the plurality of audio signal input terminals, and the signal processing means for performing the signal processing on the audio signals that are input from the plurality of audio signal input terminals. The signal processing means performs the signal processing after switching the right channel and the left channel of the audio signal that is input from at least one of the plurality of audio signal input terminals on the basis of the result by the detection of the setting detection means. If the apparatus is configured in this way, it is possible to perform the signal processing after switching the right channel and the left channel of the audio signals so that the channels correspond to the setting of the right channel and the left channel of the audio signals that are input from the audio signal input terminals. Thus, input of the right channel and the left channel can be appropriately set and processed even in a case of separately using one microphone for the front and for the rear. Additionally, a sound field with high presence can be correctly created even in a case where sound is recorded in surround sound using a plurality of stereo microphones.

In addition, the present invention is applied to an audio signal processing method for performing signal processing after inputting a stereo audio signal from each of a plurality of audio signal input terminals. A setting of a right channel and a left channel regarding the audio signals that are input from the plurality of audio signal input terminals is detected. Signal processing is performed after switching the right channel and the left channel of the audio signal that is input from at least one of the plurality of audio signal input terminals on the basis of the result of the detection.

The configuration of the present invention is applied to the audio signal processing method for performing signal processing after inputting a stereo audio signal from each of a plurality of audio signal input terminals. The setting of the right channel and the left channel regarding the audio signals that are input from the plurality of audio signal input terminals is detected. The signal processing is performed after switching the right channel and the left channel of the audio signal that is input from at least one of the plurality of audio signal input terminals on the basis of the result of the detection. If the method is configured in this way, an audio signal processing method for allowing a sound field with high present to be correctly created even in a case where sound is recorded in surround sound using a plurality of stereo microphones.

According to the present invention, a sound field with high presence can be correctly created even in a case where sound is recorded in surround sound using two stereo microphones.

### Brief Description of the Drawings

Fig. 1 is a schematic diagram used for explanation of a front-only surround-sound system that employs stereo microphones.
Fig. 2 is a schematic diagram used for explanation of a front-and-rear surround-sound system that employs one microphone.
Fig. 3 is a schematic diagram used for explanation of a front-and-rear surround-sound system that employs stereo microphones.
Fig. 4 is a block diagram showing an editing system according to an embodiment 1 of the present invention.
Fig. 5 is a block diagram showing a camera-integrated video tape recorder applied to an editing system of Fig. 4.
Fig. 6 is a schematic diagram showing a recording format in a camera-integrated video tape recorder of Fig. 5.
Fig. 7 is a block diagram showing an audio input section of a camera-integrated video tape recorder of Fig. 5.
Fig. 8 is a flowchart showing a procedure relating to an audio input section of Fig. 7 executed by a controller.
Fig. 9 is a flowchart showing a procedure relating to a surround-sound system of an audio input section of Fig. 7 executed by a controller.
Fig. 10 is a block diagram used for explanation of an operation of an audio signal of Fig. 7.
Fig. 11 is a block diagram used for explanation of an operation of an audio processing unit of Fig. 7 at the time of a front-only surround-sound recording.
Fig. 12 is a block diagram showing a computer applied to an editing system of Fig. 4.
Fig. 13 is a block diagram showing a camera-integrated video recorder according to an embodiment 2 of the present invention.
Fig. 14 is a block diagram showing an audio input section of a camera-integrated video recorder of Fig. 11.

### Reference Numerals

1, 12 camera-integrated video tape recorder, 2, 2F, 2M, 2R, 2S, 31, 35F, 35R microphone, 11 editing system, 13 computer, 15 image pickup section, 16, 55 controller, 17, 52 audio input section, 18 encoder, 19 record/playback section, 20 magnetic head, 21 magnetic tape, 22 decoder, 23, 44 display section, 24 output section, 25 operation section, 32F, 32R audio jack, 33 audio synthesis switching unit, 34 audio switching unit, 36, 56 audio processing unit, 41 optical disk drive, 42 central processing unit, 43 interface, 45 hard disk drive, 51 camera-integrated video recorder, 53 record/playback section, 54 optical disk, BUS bus

### Best Mode for Carrying Out the Invention

Embodiments of the present invention will be described in detail below with reference to the drawings accordingly.

### (1) Configuration of Embodiment 1

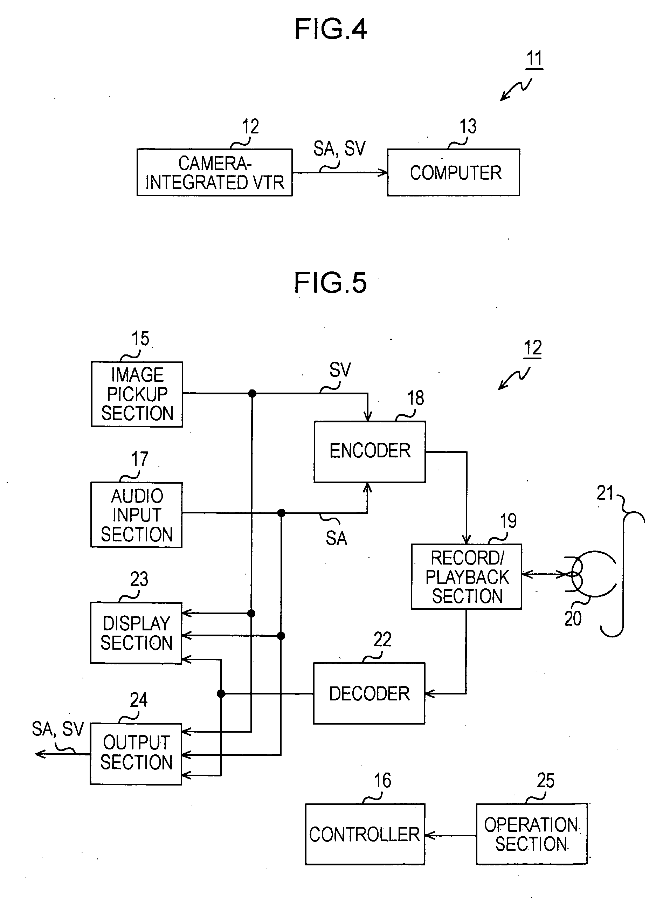

Fig. 4 is a block diagram showing an editing system according to an embodiment 1 of the present invention. In this editing system 11, various kinds of imaging results that are shot by a camera-integrated video tape recorder 12 are edited and recorded on an optical disk by a computer 13.

More specifically, in this editing system 11, the camera-integrated video tape recorder 12 acquires audio signals and video signals resulting from the imaging results, and records the audio signals and the video signals on a magnetic tape in response to user operations. In addition, the camera-integrated video tape recorder 12 reproduces audio signals SA and video signals SV having been recorded on this magnetic tape, and outputs the audio signals and video signals to the computer 13. The computer 13 records and holds the audio signals SA and the video signals SV output from this camera-integrated video tape recorder 12 in response to user operations. The computer 13 performs edition operations on these recorded audio signals SA and video signals SV, and records the edited audio signals and video signals on an optical disk in response to user operations.

Here, Fig. 5 is a block diagram showing the camera-integrated video tape recorder 12. In the camera-integrated video tape recorder 12, an image pickup section 15 acquires imaging results, and outputs video signals SV resulting from these imaging results under the control of a controller 16. An audio input section 17 obtains and processes the audio signals SA under the control of the controller 16 similarly. An encoder 18 compresses data of the video signals SV and the audio signals SA obtained from these image pickup section 15 and audio input section 17 according to, for example, MPEG (Moving Picture Experts Group) to generate encoded data.

A record/playback section 19 switches operations according to the control of the controller 16. At the time of recording, the record/playback section 19 drives a magnetic head 20 according to the encoded data generated by this encoder 18, and forms a sequential recording track on a magnetic tape 21 to record the audio signals SA and the video signals SV. In this operation, the record/playback section 19 also records various kinds of information output from the controller 16 on the magnetic tape 21 together. In addition, at the time of playback, the record/playback section 19 reproduces the encoded data having been recorded in this manner from the magnetic tape 21, and outputs the encoded data to a decoder 22. The record/playback unit 19 also reproduces the various kinds of information having been recorded together with the encoded data at the time of recording, and outputs the information to the controller 16.

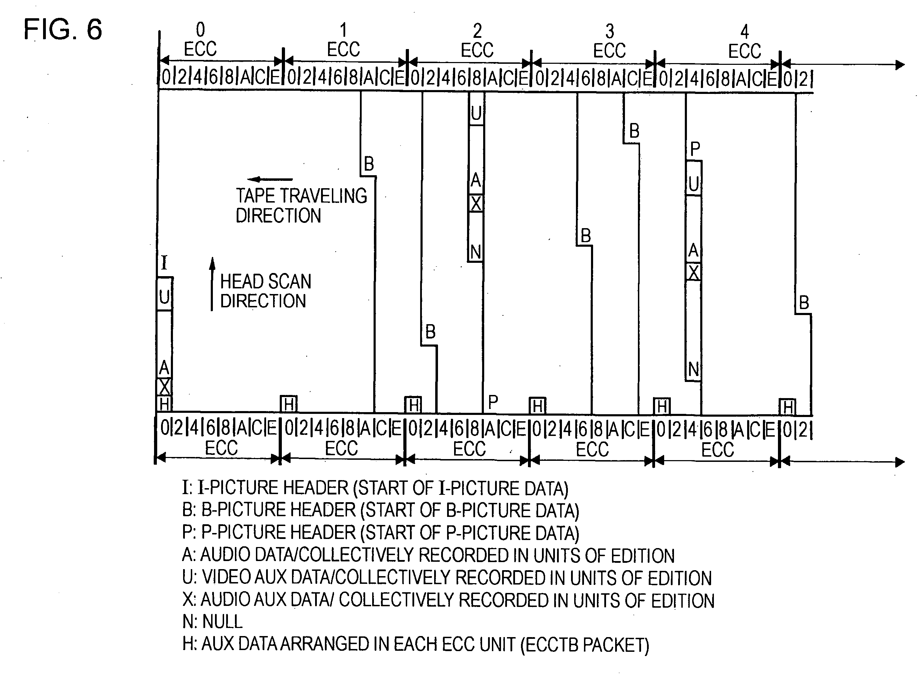

Here, Fig. 6 is a schematic diagram showing a recording format in this magnetic tape 21. This camera-integrated video tape recorder 12 sets 16 tracks as a unit of interleave processing (ECC), and records video data (I, P, B) and audio data (A) on a picture-by-picture basis. Additionally, the camera-integrated video tape recorder 12 records auxiliary data (U) of the video data and auxiliary data (X) of the audio data for every three pictures.

The record/playback section 19 drives the magnetic head 20 according to the encoded data of the video signals SV and the audio signals SA output from the encoder 18 and the various kinds of data output from the controller 16 to record the data on the magnetic tape 21 so that the recording format is compliant with this recording format.

On the other hand, the decoder 22 decompresses the encoded data output from the record/playback section 19 to reproduce the original video signals SV and audio signals SA. The display section 23 drives a liquid crystal display panel according to the video signals SV reproduced by this decoder 22 or the video signals SV obtained from the image pickup section 15 to display the reproduction results or the imaging results. In addition, the display section 23 drives an earphone connected to an earphone jack of this camera-integrated video tape recorder 12 according to the audio signals SA output from the audio input section 17 or the audio signals SA reproduced by the decoder 22 to enable monitoring of these audio signals SA.

An output section 24 is an interface, such as, for example, IEEE (The Institute of Electrical and Electoronics Engineers, Inc.) 1394. The output section 24 outputs the video signals SV and the audio signals SA reproduced by the decoder 22 or the video signals SV and the audio signals SA obtained from the image pickup section 15 and the audio input section 17 to an external device together with the various kinds of information output from the controller 16. In this embodiment, this' external device is set to the above-described computer 13.

An operation section 25 is constituted by handlers provided at each section of this camera-integrated video tape recorder 12, a touch panel provided at the display section 23, and so fourth. The operation section 25 informs the controller 16 of various kinds of user operations. The controller 16 is a computer that controls operations of this camera-integrated video tape recorder 12. The controller 16 controls operations of each section by execution of predetermined procedures in response to operations on the operation section 25.

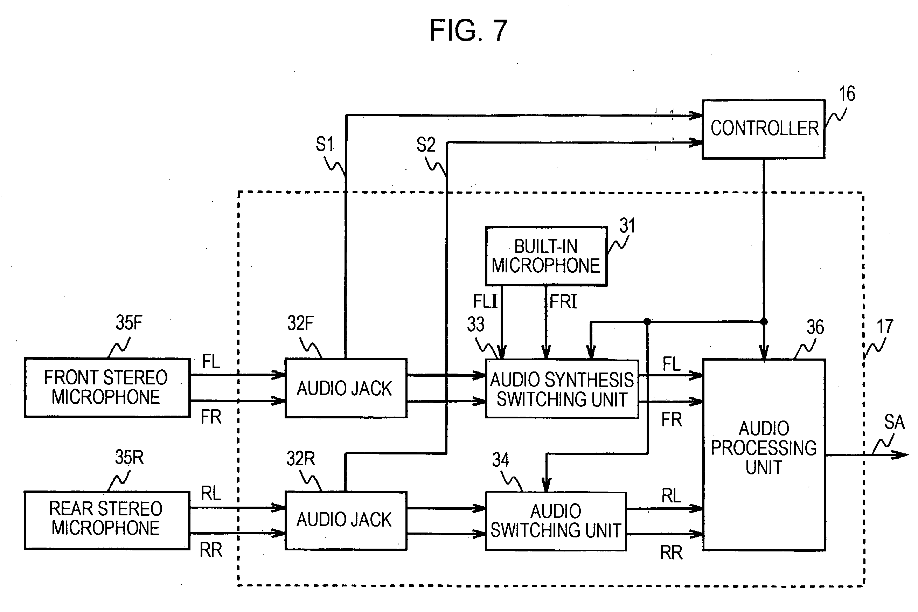

Fig. 7 is a block diagram showing a configuration of the audio input section 17 of this camera-integrated video tape recorder 12. In this audio input section 17, a built-in microphone (built-in mic.) 31 is arranged at, for example, a front face of this camera-integrated video tape recorder 12. The built-in microphone 31 outputs right-channel and left-channel audio signals FRI and FLI.

Audio jacks 32F and 32R are audio input terminals to which an integrated surround-sound microphone 2 described above regarding Fig. 2 is connected. Two-channel audio signals, for the front and the rear (main and sub) each, are input to each of the audio jacks. Upon plugs of microphones being connected to the audio jacks 32F and 32R, a contact point of a switching circuit provided inside is switched to the off state, and the audio jacks inform the controller 16 of connection signals S1 and S2 for detecting connections of microphones.

An audio synthesis switching unit 33 is supplied with audio signals FRI and FLI output from the built-in microphone 31 and audio signals FR and FL input from the front audio jack 32F. Under the control of the controller 16, the audio synthesis switching unit 33 selectively outputs one pair of the audio signals, or synthesizes these audio signals and outputs the synthesized audio signals. In this camera-integrated video tape recorder 12, audio signals output from this audio synthesis switching unit 33 are input to an audio processing unit 36. The audio signals are recorded on the magnetic tape 21 selectively using the built-in microphone 31 and an external microphone connected to the audio jack 32F. Alternatively, these audio signals are synthesized so that the synthesized audio signals can be recorded on the magnetic tape 21.

An audio switching unit 34 is supplied with audio signals RR and RL input from the rear audio jack 32R. Under the control of the controller 16, the audio switching unit 34 outputs these supplied audio signals RR and RL as they are. In addition, the audio switching unit 34 switches the right channel and the left channel, and outputs the audio signals.

By means of switching of the channels in this audio switching unit 34, the camera-integrated video tape recorder 12 is configured to be able to record audio signals in correct polarity and to correctly create a sound field with high presence even in a case where audio signals are recorded in the front-and-rear surround-sound system by connecting two stereo microphones 35F and 35R to the audio jacks 32F and 32R, respectively.

The audio processing unit 36 outputs the audio signals to the encoder 18 and the display section 23 after correcting signal levels of the audio signals output from the audio synthesis switching unit 33 and the audio switching unit 34.

The controller 16 detects connections of external microphones to the audio jacks 32F and 32R with the connection signals S1 and S2 output from the audio jacks 32F and 32R, respectively. The controller 16 controls operations of the audio synthesis switching unit 33, the audio switching unit 34, and so forth by executing predetermined procedures on the basis of this detection result.

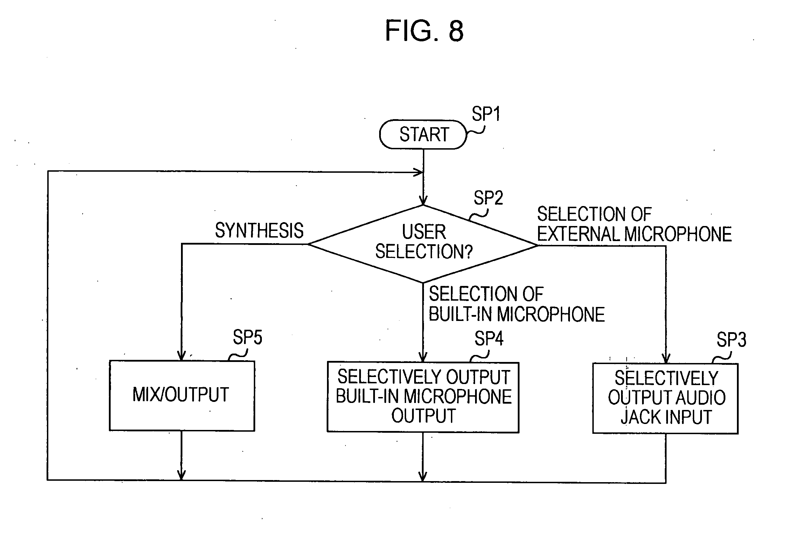

More specifically, upon detecting connection of an external microphone only to the front audio jack 32F, the controller 16 starts a procedure of Fig. 8, and advances the procedure from STEP SP1 to STEP SP2. Here, the controller 16 detects a setting of an audio input switch provided at the operation section 25 so as to detect users audio input selection. Here, if users set the audio input switch so that the external microphone is selected, the controller 16 advances the procedure from STEP SP2 to SP3. The controller 16 sets the operation of the audio synthesis switching unit 33 so that the audio signals FL and FR of the external microphone input from the audio jack 32F are selectively input to the audio processing unit 36. Thereafter, the procedure returns to STEP SP2.

On the other hand, if users set the audio input switch so that the built-in microphone 31 is selected, the controller 16 advances the procedure from STEP SP2 to STEP SP4. The controller 16 sets the operation of the audio synthesis switching unit 33 so that the audio signals FLI and FRI output from the built-in microphone 31 are selectively input to the audio processing unit 36. Thereafter, the procedure returns to STEP SP2.

In this embodiment, by means of processing of these STEP SP2 to STEP SP4, audio signals can be acquired while switching between the built-in microphone and the external microphone depending on the situation even when the external microphone is connected, thus being able to improve the usability when it is compared to conventional one. More specifically, in a case where camera operators themselves are interviewers, voice of an interview target and voice of the interviewer can be recorded alternately by switching between microphones as described above, whereby an edition operation or the like regarding post-processing can be simplified.

On the other hand, if users set the audio input switch so that audio synthesis is selected, the controller 16 advances the procedure from STEP SP2 to STEP SP5. The controller 16 sets the operation of the audio synthesis switching unit 33 so that the audio signals FL and FR of the external microphone input from the audio jack 32F and the audio signals FLI and FRI output from the built-in microphone 31 are mixed and input to the audio processing unit 36. Thereafter, the procedure returns to STEP SP2.

In this case, by means of the processing of these STEP SP2 and STEP SP5, for example, background audio and voice of an interview target can be synthesized and recorded. Thus, it is possible to improve the usability by simplifying an edition operation or the like regarding post-processing.

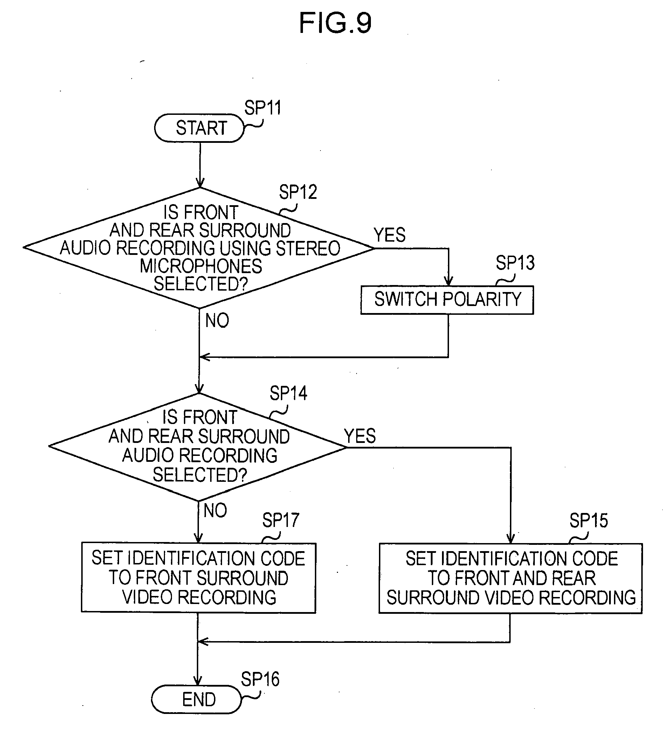

On the other hand, if the front audio jack 32F and the rear audio jack 32R detect connections of external microphones, the controller 16 starts a procedure shown in Fig. 9, and advances the procedure from STEP SP11 to STEP SP12. Here, the controller 16 detects a setting of a system setting switch regarding surround-sound recording provided at the operation section 25 so as to detect users surround-sound recording selection. Here, in this embodiment, this system setting switch may be constituted by, for example, a slide switch so as to be able to select a front-only surround-sound system using two stereo microphones (see, Fig. 1), a front-and-rear surround-sound system using two stereo microphones (see, Fig. 3), or a front-and-rear surround-sound system using an integrated microphone (see, Fig. 2). In this embodiment, this system setting switch constitutes setting detection means for detecting the setting of the right channel and the left channel regarding audio signals input from the audio jack 32R for sub microphone. The system setting switch also constitutes system detection means for detecting a surround-sound system of audio signals input from a plurality of audio jacks 32F and 32R.

The controller 16 determines whether or not the surround-sound recording set by users is the front-and-rear surround-sound system using two stereo microphones on the basis of a detection result of this system setting switch. If a positive result is obtained here, the controller 16 advances the procedure from STEP SP12 to STEP SP13. After instructing the audio switching unit 34 to switch the right channel and the left channel and to output the audio signal, the controller advances the procedure to STEP SP14. On the other hand, if a negative result is obtained at STEP SP12, the controller 16 advances the procedure from STEP SP12 directly to STEP SP14 without instructing such switching of the polarity.

In this embodiment, by means of these STEP SP12 and STEP SP13, the camera-integrated video tape recorder is configured to be able to correctly create a sound field with high presence even in a case where the surround-sound recording of various forms described above regarding Fig. 1 to Fig. 3 is performed.

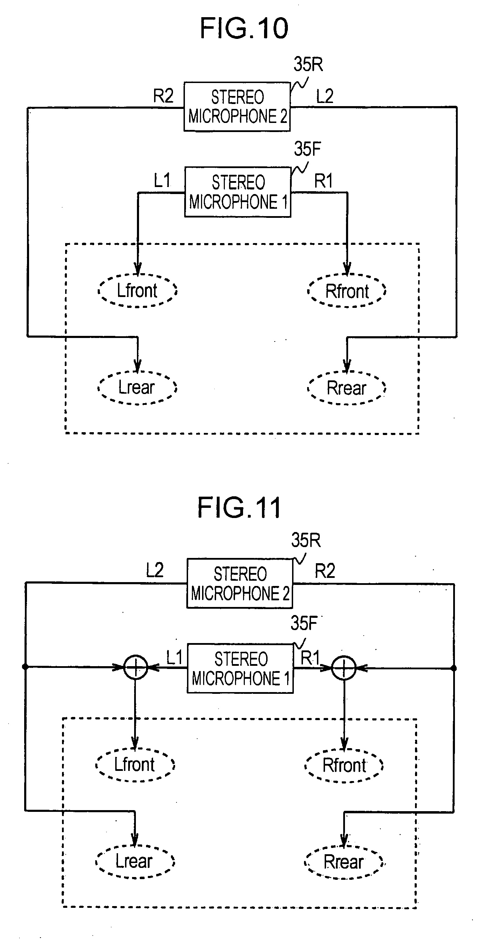

At following STEP SP14, the controller 16 determines whether or not the surround-sound recording set by users is the front-and-rear surround-sound system on the basis of the setting of this system setting switch. If a positive result is obtained here, the controller 16 advances the procedure from STEP SP14 to STEP SP15. The controller 16 sets an identification code of four-channel audio signals to be recorded on the magnetic tape 21 as the auxiliary data of the audio data to an identification code of the front-and-rear surround-sound system. In addition, as shown in Fig. 10, the controller 16 sets the operation of the audio processing unit 36 to encode the audio input from the external microphones 35F and 35R for each channel. Thereafter, the procedure is advanced to STEP SP16, and this procedure is terminated.

On the other hand, if a negative result is obtained at STEP SP14, the controller 16 advances the procedure from STEP SP14 to STEP SP17 in this case. The controller 16 sets an identification code of four-channel audio signals to be recorded on the magnetic tape 21 as the auxiliary data of the audio data to an identification code of the front-only surround-sound system. In addition, regarding the front-and-rear surround-sound recording using an integrated microphone (Fig. 2), the controller 16 sets the operation of the audio processing unit 36 to encode the audio signals input from the audio jacks 32F and 32R for each channel as in the case described before regarding Fig. 10. Thereafter, the procedure returns to STEP SP16. In contrast, as shown Fig. 11, in the case of executing the front-and-rear surround-sound recording using two stereo microphones, the controller 16 sets the operation of the audio processing unit 36 to encode, regarding the rear side, the audio signals input from the rear audio jack 32R as they are, and to encode, regarding the front side, the audio signals after adding the audio signals input from the front and rear audio jacks 32F and 32R. Thereafter, the procedure is advanced to STEP SP16, and terminated.

In this camera-integrated video tape recorder 12, this identification code is recorded on the magnetic tape 21 as the auxiliary data of the audio data. In addition, this identification code recorded on the magnetic tape 21 is reproduced together with the video signals and the audio signals, and is output to the computer 13. In this embodiment, the audio signals can be correctly processes and a sound field with high presence can be created by the output of this identification code, in a case where audio signals are recorded on an optical disk in a 5.1-channel surround-sound system after processing the audio signals recorded on the magnetic tape 21 by the computer 13.

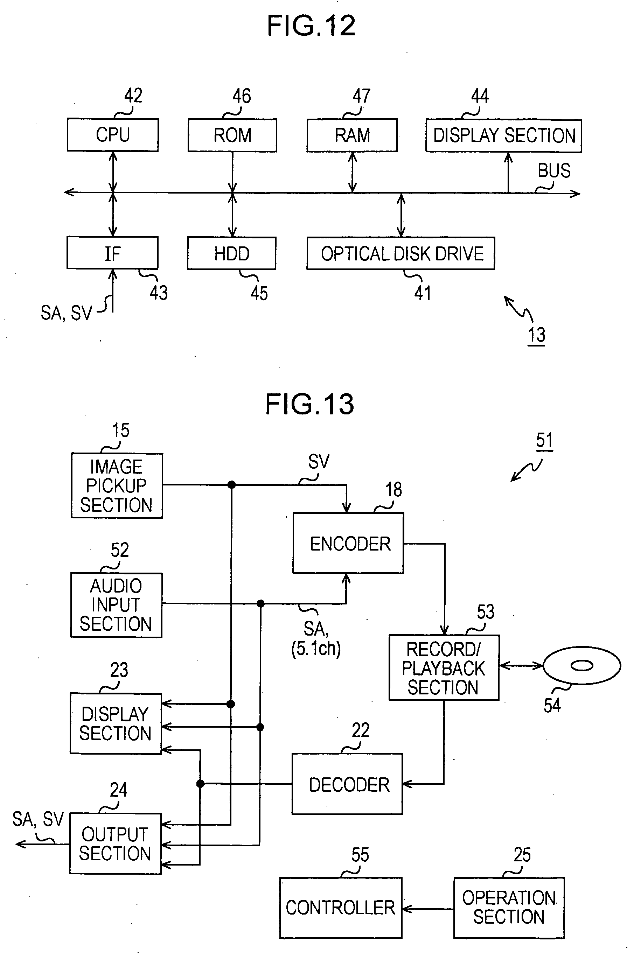

More specifically, Fig. 12 is a block diagram showing the computer 13. In this computer 13, an optical disk drive 41 records data output to a bus BUS on an optical disk of DVD under the control of a central processing unit (CPU) 42. In addition, the optical disk drive 41 reproduces the data recorded on this optical disk, and outputs the data to the bus BUS. An interface 43 is an interface, such as IEEE. 1394. The interface 43 obtains the video signals SV, the audio signals SA, and various kinds of relating information output from the camera-integrated video tape recorder 12, and outputs the signals and the data to the bus BUS.

The display section 44 displays various kinds of images relating to processing of this computer 13. Furthermore, the display section reproduces and outputs various kinds of audio. A hard disk drive (HDD) 45 records application programs used for processing of this computer 13, video signals SV and audio signals SA input through the interface 43, and so forth. The hard disk drive 45 also reproduces and outputs these recordings.

After allocating and activating a work area in a random access memory (RAM) 47 in accordance with recordings of a read only memory (ROM) 46, the central processing unit 42 executes various kinds of application programs recorded on the hard disk drive 45 in response to user operations.

In this operation, if an application program relating to processing of movie files is launched by users, the central processing unit 42 controls operations of the interface 43 and the hard disk drive 45 in response to user operations, thereby loading, together with the relating information, the video signals SV and the audio signals SA reproduced by the camera-integrated video tape recorder 12, and recording the signals and the information on the hard disk drive 45. In addition, at this time, the computer is set so that these video signals SV and the audio signals SA can be monitored with the display section 44. In this embodiment, this application program regarding processing of movie files is preinstalled in this computer 13 and provided. Instead of providing by such pre-installation, the program may be provided by downloading through a network, such as the Internet, or may be provided by downloading through various kinds of recording media, such as an optical disk, a magnetic disk, and a memory card.

Furthermore, upon being instructed to edit the video signals SV and the audio signals SA recorded on the hard disk drive 45, the central processing unit 42 accepts the setting of editing points of non-linear edition, and generates video signals having undergone effect processing, if necessary.

If recording of the result of the edition operation onto a DVD is instructed after performing the edition operation in this manner, the central processing unit 42 transfers the video signals SV and the audio signals SA according to the result of the edition operation from the hard disk drive 45 to the optical disk drive 41 to record these video signals SV and the audio signals SA on the optical disk.

At this time, upon being instructed to record the 5.1-channel surround-sound audio signals SA by users, the central processing unit 42 performs arithmetic processing on the audio signals output from the hard disk drive 45, thereby converting the four-channel audio signals SA input from the camera-integrated video tape recorder 12 into the 5.1-channel surround-sound audio signals and recording these 5.1-channel audio signals on an optical disk by the optical disk drive 41.

At this time, the central processing unit 42 generates the 5.1-channel audio signals after switching the arithmetic processing according to the identification code regarding the surround-sound system that is reproduced from the magnetic tape 21 as data accompanying to the audio signals SA, and correctly processes the audio signals, thus allowing a sound field with high presence to be reproduced.

### (2) Operation of Embodiment 1

With the above-described configuration, in this editing system 11 (Fig. 4), users carry the camera-integrated video tape recorder 12 and record various scenes. Additionally, these various recorded scenes are reproduced by the camera-integrated video tape recorder 12, and are input to the computer 13. After performing edition operations, the scenes are recorded on an optical disk.

In these operations, the video signals SV acquired by the image pickup section 15 and the audio signals SA acquired by the audio input section 17 are compressed by the encoder 18 to generate the encoded data in the camera-integrated video tape recorder 12 (Fig. 5). This encoded data is recorded on the magnetic tape 21 by the record/playback section 19. The encoded data of the video signals SV and the audio signals SA recorded in this manner is reproduced by the record/playback section 19. This encoded data is decompressed and reproduced by the decoder 22, and is output to the computer 13 through the output section 24.

The audio signals SA to be recorded on the magnetic tape 21 together with the video signals SV in this manner (Fig. 7) are acquired by the built-in microphone 31 when the external microphones 35F and 35R are not connected to the audio jacks 32F and 32R. These stereo audio signals acquired by the built-in microphone 31 are recorded on the magnetic tape 21.

On the other hand, if the external microphone 35F is connected to the front audio jack 32F, the connection of this external microphone 35F is detected by the controller 16 through the audio jack 32F. In addition, the setting of the audio input switch provided at the operation section 25 is also detected by the controller 16 through this detection.

In the camera-integrated video tape recorder 12, if users instruct the recording of the audio signals acquired by the built-in microphone 31 with the external microphone 35F being connected, the audio signals acquired by the built-in microphone 31 are selectively input to the encoder 18 through the audio synthesis switching unit 33 and the audio processing unit 36 under the control of the controller 16. The audio signals acquired by the built-in microphone 31 are recorded on the magnetic tape 21. On this other hand, if users instruct the recording with the external microphone 35F, the audio signals acquired by the external microphone 35F that are input through the audio jack 32F are selectively input to the encoder 18 through the audio synthesis switching unit 33 and the audio processing unit 36. The audio signals acquired by the external microphone 35F are recorded on the magnetic tape 21. Additionally, if users instruct the recording through the audio synthesis, the audio signals acquired by the built-in microphone 31 and the audio signals acquired by the external microphone 35F input through the audio jack 32F are synthesized by the audio synthesis switching unit 33. Thereafter, the synthesized signals are input to the encoder 18 through the audio processing unit 36. The audio signals acquired by the built-in microphone 31 and the audio signals acquired by the external microphone 35F are synthesized and recorded on the magnetic tape 21.

Accordingly, in this camera-integrated video tape recorder 12, it is possible to record the audio signals selectively using the built-in microphone 31 and the external microphone 35F depending on the situation, or simultaneously using the both microphones, thereby being able to improve the usability.

On the other hand, if the external microphones 35F and 35R are connected to the front audio jack 32F and the rear audio jack 32R, the connections of these external microphones 35F and 35R are detected by the controller 16 through the audio jacks 32F and 32R. In addition, the setting of the system setting switch regarding the surround-sound system provided at the operation section 25 is detected by the controller 16 through this detection.

In the camera-integrated video tape recorder 12, if users connect the integrated microphone 2 of the front-and-rear surround-sound system (Fig. 2) to these audio jacks 32F and 32R, the four-channel audio signals acquired through these audio jacks 32F and 32R are processed by the encoder 18 and recorded on the magnetic tape 21 under the control of the controller 16. In addition, if the front-only surround-sound recording is attempted using two stereo microphones (Fig. 1), the four-channel audio signals acquired from these audio jacks 32F and 32R undergoes predetermined signal processing (Fig. 11), then are processed by the encoder 18 and recorded on the magnetic tape 21. On'the other hand, if the front-and-rear surround-sound recording is attempted using two stereo microphones by directing one of such two microphones to rearward (Fig. 3), the right channel and the left channel of the audio signals assigned to the rear are switched by the audio switching unit 34. The four-channel audio signals acquired from the audio jacks 32F and 32R are recorded on the magnetic tape 21 (Fig. 12).

Accordingly, in this embodiment, it is possible to correctly set the right channel and the left channel and record the audio signals even in a case where sound is recorded in surround sound using a plurality of stereo microphones, thus being able to correctly create a sound field with high presence.

When recording four-channel audio signals in this manner, this camera-integrated video tape recorder 12 sets the identification codes of the front-only surround-sound system and the front-and-rear surround sound system as one piece of information (X) accompanying to the audio data (Fig. 6), and records the identification code on the magnetic tape 21. As a result, phases between the audio signals can be correctly set when the audio data recorded on the magnetic tape 21 is processed, thereby being able to correctly create a sound field with high presence.

More specifically, the video signals SV and the audio' signals SA to be reproduced by the camera-integrated video tape recorder 12 (Fig. 10) are input to the computer 13 through the interface 43, and are recorded on the hard disk drive 45. In addition, the video signals SV and the audio signals SA recorded on this hard disk drive 45 are recorded on an optical disk by the optical disk drive 41 after having undergone edition operations in accordance with user instructions.

At this time, in the computer 13, the four-channel audio signals SA acquired from the camera-integrated video tape recorder 12 are converted into the 5.1-channel surround-sound audio signals through arithmetic processing, and are recorded on an optical disk. This arithmetic processing is switched between the front-only surround-sound system and the front-and-rear surround-sound system on the basis of the identification code recorded on the magnetic tape 21.

Accordingly, in this embodiment, it is possible to appropriately perform the arithmetic processing on the audio signals recorded in the front-only surround-sound system and the front-and-rear surround-sound system, and to convert the audio signals into the 5.1-channel audio signals, therefore being able to create a sound field with high presence.

### (3) Advantages of Embodiment 1

According to the above-described configurations, even in a case where sound is recorded in surround sound using a plurality of stereo microphones, a sound field with high presence can be correctly created by detecting the settings of channels of audio signals input from a plurality of audio signal input terminals and by performing signal processing after switching the right channel and the left channel on the basis of this detection result.

In addition, it is possible to appropriately execute processing of audio signals input from a plurality of audio signal input terminals in this manner and create a sound field with high presence by detecting a surround-sound system of the audio signals input from the plurality of audio signal input terminals and by recording this detected surround-sound system on a recording medium together with the audio signals.

### (4) Embodiment 2

In this embodiment 2, the present invention is applied to a camera-integrated video recorder for recording 5.1-channel audio signals on an optical disk. More specifically, Fig. 13 is a block diagram showing a camera-integrated video recorder 51 according to this embodiment 2. In this camera-integrated video recorder 51, configurations similar to those of the camera-integrated video tape recorder 12 described above regarding Fig. 5 are denoted by corresponding numerals, and duplicate description is omitted.

In this camera-integrated video recorder 51, an audio input section 52 acquires audio signals, and outputs the audio signals on two channels or 5.1 channels. A record/playback section 53 records encoded data of audio signals SA obtained from this audio input section 52 and video signals SV obtained from an image pickup section 15 on an optical disk 54 under the control of a controller 55. In addition, the record/playback section 53 reproduces the encoded data recorded on this optical disk 54, and outputs the encoded data to a decoder 22. In response to user operations, this camera-integrated video recorder 51 records 5.1-channel audio signals on an optical disk together with results of imaging and reproduces and outputs these recorded audio signals and results of imaging through the processing of these encoder 18, record/playback section 53, and decoder 22 under the control of the controller 55.

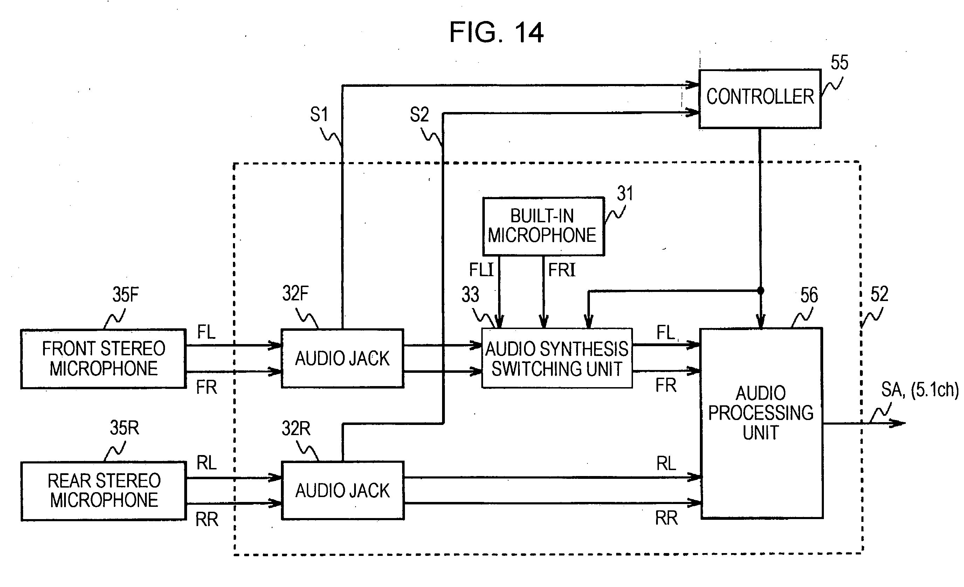

Fig. 14 is a block diagram showing a configuration of this audio input section 52. In this configuration shown in Fig. 14, configurations similar to those of the audio input section 17 described above regarding Fig. 7 are denoted by corresponding numerals, and duplicate description is omitted. Accordingly, also in this embodiment, the audio input section 52 selectively outputs audio signals input through an audio jack 32F and audio signals acquired by a built-in microphone 31, or synthesizes and outputs the audio signals in accordance with a setting of an audio input switch.

On the other hand, if microphones are connected to audio jacks 32F and 32R, this audio input section 52 converts four-channel audio signals input through the audio jacks 32F and 32R into 5.1-channel audio signals with an audio processing unit 56, and outputs the 5.1-channel audio signals under the control of the controller 55. In this processing, the 5.1-channel audio signals are generated with arithmetic processing being switched in accordance with the surround-sound system of the four-channel audio signals input through the audio jacks 32F and 32R and the setting of the right channel and the left channel. Thus, the camera-integrated video recorder 51 executes the switching of the right channel and the left channel and the switching of the arithmetic processing between the front-and-rear surround-sound system and the front-only surround-sound system that are described before regarding the embodiment 1 by the switching of the arithmetic processing in the audio processing unit 56, thereby correctly creating a sound field with high presence.

Advantages similar to those of the embodiment 1 can be obtained by detecting the setting of the channels of the audio signals input from a plurality of audio signal input terminals, by performing signal processing after switching the right channel and the left channel in accordance with this detection result, and by switching the right channel and the left channel of the audio signals through the switching of this arithmetic processing of the audio signals, like this embodiment.

### (5) Other Embodiments

In the above-described embodiments, a case where setting detection means and system detection means are constituted by a system setting switch, which is a slide switch, and the setting of the right channel and the left channel and the surround-sound system are detected by a user operation of this system setting switch has been described. However, the present invention is not limited to this. This system setting switch may be constituted by a pressing button or the like. Furthermore, the setting of these right channel and left channel and the surround-sound system may be detected through displaying of a menu by a display section and an operation on a touch panel.

In addition, in the above-described embodiments, a case of processing audio input acquired by two stereo microphones has been described. However, the present invention is not limited to this, and can be applied widely to cases of processing audio input acquired by a plurality of stereo microphones.

Additionally, in the above-described embodiments, a case of processing 5.1-channel audio signals has been described. However, the present invention is not limited to this, and can be applied widely to cases of processing 6.1-channel audio signals, for example.

Furthermore, in the above-described embodiments, a case of recording results of imaging on a magnetic tape and an optical disk together with audio signals has been described. However, the present invention is not limited to this, and can widely employ various kinds of recording medium, such as, for example, a memory card, used for recording.

### Industrial Applicability

The present invention relates to audio signal processing apparatuses and audio signal processing methods, and can be applied to, for example, camera-integrated video tape recorders.

## Claims

1. An audio signal processing apparatus **characterized by** comprising:
a plurality of audio signal input terminals each for inputting a stereo audio signal;
setting detection means for detecting a setting of a right channel and a left channel regarding the audio signals that are input from the plurality of audio signal input terminals; and
signal processing means for performing signal processing on the audio signals that are input from the plurality of audio signal input terminals, wherein
the signal processing means
performs the signal processing after switching the right channel and the left channel of the audio signal that is input from at least one of the plurality of audio signal input terminals on the basis of the result of the detection by the setting detection means.

2. The audio signal processing apparatus according to Claim 1, **characterized by** comprising:
system detection means for detecting a surround-sound system of the audio signals that are input from the plurality of audio signal input terminals, wherein
the signal processing means
includes recording means for recording the audio signals that are input from the plurality of audio signal input terminals on a recording medium, and
records the surround system of the audio signals on the recording medium on the basis of the result of the detection by the system detection means.

3. The audio signal processing apparatus according to Claim 2, **characterized in that**
the signal processing means
performs arithmetic processing on the audio signals that are input from the plurality of audio signal input terminals, and records multi-channel audio signals on the recording medium, and
switches the right channel and the left channel of the audio signals by changing the arithmetic processing.

4. An audio signal processing method for performing signal processing after inputting a stereo audio signal from each of a plurality of audio signal input terminals, the method **characterized by** comprising:
detecting a setting of a right channel and a left channel regarding the audio signals that are input from the plurality of audio signal input terminals, and performing signal processing after switching the right channel and the left channel of the audio signal that is input from at least one of the plurality of audio signal input terminals on the basis of the result of the detection.
